(19) Europäisches Patentamt
European Patent Office
Office européen des brevets

(11) **EP 4 492 604 A1**

(12) **EUROPEAN PATENT APPLICATION**
published in accordance with Art. 153(4) EPC

(43) Date of publication:
**15.01.2025 Bulletin 2025/03**

(21) Application number: **22931019.8**

(22) Date of filing: **22.11.2022**

(51) International Patent Classification (IPC):
*H02J 3/00* (2006.01)    *H02J 13/00* (2006.01)

(52) Cooperative Patent Classification (CPC):
**H02J 3/00; H02J 13/00;** Y04S 10/50

(86) International application number:
**PCT/JP2022/043193**

(87) International publication number:
**WO 2023/171047 (14.09.2023 Gazette 2023/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.03.2022 JP 2022036596**

(71) Applicant: **Hitachi, Ltd.**
**Tokyo 100-8280 (JP)**

(72) Inventors:
• **KIRIHARA, Kenta**
**Tokyo 100-8280 (JP)**
• **IMAI, Hidetaka**
**Tokyo 100-8280 (JP)**
• **KAWAMOTO, Naoki**
**Tokyo 100-8280 (JP)**
• **YATSU, Masahiro**
**Tokyo 100-8280 (JP)**
• **TANSO, Hiroshi**
**Tokyo 100-8280 (JP)**
• **UENO, Shintaro**
**Tokyo 100-8280 (JP)**

(74) Representative: **MERH-IP Matias Erny Reichl Hoffmann**
**Patentanwälte PartG mbB**
**Paul-Heyse-Straße 29**
**80336 München (DE)**

(54) **SYSTEM VIOLATION RESOLUTION CONTROL CALCULATION SYSTEM, SYSTEM VIOLATION RESOLUTION SYSTEM, FAILURE CALCULATION SYSTEM, SYSTEM STABILIZATION SYSTEM, PREVENTION CONTROL SYSTEM, AND SYSTEM VIOLATION RESOLUTION CONTROL CALCULATION METHOD**

(57) A system violation resolution control calculation system that calculates system violation resolution control for resolving a system violation in a power system, the system violation resolution control calculation system including: a constraint condition formulation unit that formulates a constraint condition of an optimization problem for calculating the system violation resolution control based on a model of the power system and a state of the power system; and a fluctuation influence calculation unit that calculates a degree of influence of a power fluctuation in each bus line on a line power flow of each power transmission line of the power system based on the constraint condition and a fluctuation range indicating a range of a power fluctuation in each bus line of the power system. Therefore, the system violation resolution control calculation system calculates a robust violation resolution control for fluctuation factors in a power system.

EP 4 492 604 A1

[FIG. 2]

SYSTEM VIOLATION RESOLUTION CONTROL CALCULATION SYSTEM

DB1 POWER SYSTEM MODEL

DB2 POWER SYSTEM STATE

DB3 FLUCTUATION RANGE

12 CONSTRAINT CONDITION FORMULATION UNIT

13 FLUCTUATION INFLUENCE CALCULATION UNIT

14 SYSTEM VIOLATION RESOLUTION CONTROL CALCULATION UNIT

DB4 FLUCTUATION INFLUENCE

15 SYSTEM VIOLATION RESOLUTION CONTROL EVALUATION UNIT

DB5 SYSTEM VIOLATION RESOLUTION CONTROL

DB6 SYSTEM VIOLATION RESOLUTION POSSI-BILITY

16 OUTPUT UNIT

## Description

Technical Field

The present invention relates to a system violation resolution control calculation system, a system violation resolution system, a fault calculation system, a system stabilization system, a prevention control system, and a system violation resolution control calculation method.

Background Art

In a power system for transporting electric power, fluctuation factors due to generation of power such as renewable energy are increasing. It is known that fluctuation factors in a power system significantly affect the power flow of the power system, and there is a concern in various regions that the power flow will become complicated. It is known that such complication of a power system provokes a violation in the power system such as overload of power transmission equipment, and complicates recovery from the violation state. For example, when an attempt is made to resolve a violation of a power system by changing the output upper limit of a wind power generator, there is a concern that the state of the power system changes before the result of this control is reflected and thus the violation cannot be appropriately resolved.

In response to such fluctuation factors, methods to cope with fluctuations have been proposed in the field of power systems.

For example, PTL 1 is known as an example of application to a power generation plan. In PTL 1, a scenario tree and a branch-cut-price algorithm are used to develop a power generation plan that responds to fluctuations.

In addition, PTL 2 is known to maintain the frequency of a power system and resolve a line violation. PTL 2 proposes a method of resolving a fluctuation in a control loop by using partial model predictive control and adaptive control.

Further, PTL 3 is known as an example of coping with an assumed fault which is one of uncertainty factors that occur infrequently. In PTL 3, an optimization problem in which serious fluctuation factors are considered as constraints is solved by using a mathematical approach based on a bi-level decomposition scheme, whereby an operational point that can avoid these fluctuation factors is calculated.

In addition, NPL 1 and NPL 2 are known as examples in which operation is performed without limiting to serious faults. In NPL 1, a fluctuation is regarded as a distribution and is taken into account as a constraint condition in calculating an operation point. In NPL 2, an operational margin is regarded as a probability distribution and is taken into account as a constraint condition, whereby a probabilistically-optimal operation point is calculated.

Citation List

Patent Literature

    PTL 1: US2015/0242757B
    PTL 2: US9507367B
    PTL 3: WO2011/112365

Non Patent Literature

    NPL 1: L. Roald, S. Misra, T. Krause, and G. Andersson, "Corrective Control to Handle Forecast Uncertainty: A ChanceConstrained Optimal Power Flow, "in IEEE Transactions on Power Systems, vol. 32, no. 2, pp. 1626-1637, March 2017, doi: 10.1109/TPWRS.2016.2602805.
    NPL 2: Haoyuan Qu, L. Roald and G. Andersson, "Uncertainty margins for probabilistic AC securityassessment, "2015 IEEE Eindhoven PowerTech, 2015, pp. 1-6, doi: 10.1109/PTC.2015.7232297.

Summary of Invention

Technical Problem

Fluctuations in a power system tend to increase as the size of the power system and fluctuation factors increase. Since the fluctuations are continuous, it is difficult to properly reflect the fluctuations only by a scenario tree represented by a discrete space as described in PTL 1 and PTL 3.

In addition, as in PTL 2, in a method of executing control in accordance with measurement data, although it is possible to cope with a fluctuation, a range of a fluctuation that can be coped with is not clear.

In NPL 1 and NPL 2, since a fluctuation is regarded as a probability distribution, sufficient performance can be exhibited in general operation. However, since it is not possible to cope with an edge case due to a fluctuation component, there is a risk in utilizing the same control for resolving the occurrence of a system violation.

The invention is made in consideration of the above-described circumstances, and an object of the invention is to calculate a robust violation resolution control for fluctuation factors in a power system.

Solution to Problem

In order to solve the above-described problems, one aspect of the invention is a system violation resolution control calculation system that calculates system violation resolution control for resolving a system violation in a power system, the system violation resolution control calculation system including: a constraint condition formulation unit that formulates a constraint condition of an optimization problem for calculating the system violation resolution control based on a model of the power system and a state of the power system; and a fluctuation influence calculation unit that calculates a degree.of influence of a power fluctuation in each bus line on a line power flow of each power transmission line of the power system based on the constraint condition and a fluctuation range indicating a range of a power fluctuation in each bus line of the power system.

Advantageous Effects of Invention

According to the invention, it is possible to calculate a robust violation resolution control for fluctuation factors in a power system.

Problems, configurations, and effects other than those described above will be clarified by the following description of embodiments of the invention.

Brief Description of Drawings

[FIG. 1] FIG. 1 is a diagram illustrating a configuration example of a power system.
[FIG. 2] FIG. 2 is a diagram illustrating a configuration example of a system violation resolution control calculation system according to Embodiment 1.
[FIG. 3] FIG. 3 is a diagram illustrating a hardware configuration example of the system violation resolution control calculation system according to Embodiment 1.
[FIG. 4] FIG. 4 is a flowchart showing an example of overall processing of the system violation resolution control calculation system according to Embodiment 1.
[FIG. 5] FIG. 5 is an explanatory diagram of an operation example of a system violation resolution control calculation system in a related art.
[FIG. 6] FIG. 6 is an explanatory diagram of an operation example of the system violation resolution control calculation system according to Embodiment 1.
[FIG. 7] FIG. 7 is a diagram illustrating an example of a screen display displayed at an output unit of the system violation resolution control calculation system according to Embodiment 1.
[FIG. 8] FIG. 8 is a diagram illustrating a configuration example of a fluctuation range calculation unit according to Embodiment 3.
[FIG. 9] FIG. 9 is a flowchart showing an example of fluctuation range calculation processing of the fluctuation range calculation unit according to Embodiment 3.
[FIG. 10] FIG. 10 is an explanatory diagram of range calculation in the fluctuation range calculation unit according to Embodiment 3.
[FIG. 11] FIG. 11 is a diagram illustrating a configuration example of a system violation resolution system according to Embodiment 4.
[FIG. 12] FIG. 12 is a diagram illustrating configuration examples of a fault calculation system and a system stabilization system according to Embodiment 5.
[FIG. 13] FIG. 13 is a diagram illustrating configuration examples of a prevention control system and a system operation system according to Embodiment 6.

Description of Embodiments

Embodiments of the invention will be described below with reference to the accompanying drawings. The embodiments are examples for describing the invention, and omission and simplification are made as appropriate for clarifying the description. The invention can also be implemented in various other forms. Unless otherwise specified, each component may be singular or plural.

When there is a plurality of components having the same or similar functions, the components may be described by adding different suffixes to the same reference sign. When there is no need to distinguish between these components, the suffixes may be omitted.

In the embodiments, there may be a case in which processing is performed by executing a program. Here, a computer executes a program with a processor (e.g., a central processing unit (CPU), a graphics processing unit (GPU)) and performs processing defined by the program by using a storage resource (e.g., a memory), an interface device (e.g., a communication port), and the like. For this reason, the processor may be a subject that performs the processing by executing the program. Similarly, a controller, a device, a system, a computer, or a node including a processor may be a subject that performs processing by executing a program. The subject that performs processing by executing a program may be an arithmetic unit and may include a dedicated circuit for performing specific processing. Here, the dedicated circuit is a Field Programmable Gate Array (FPGA), an Application Specific Integrated Circuit (ASIC), a Complex Programmable Logic Device (CPLD), a quantum computer, or the like.

A program may be installed from a program source into a computer. The program source may be, for example, a program distribution server or a computer readable storage medium. When the program source is a program distribution server, the program distribution server includes a processor and a storage resource that stores a program to be distributed, and the processor of the program distribution server may distribute the program to other computers. In the embodiments, two or more programs may be implemented as one program, or one program may be implemented as two or more programs.

In the following description, "XXX DB" refers to a database that stores "XXX" which is information (or data) and may also refer to "XXX" itself stored in the "XXX DB". DataBase (DB) is an example of a storage unit.

In the following description, for example, a symbol obtained by adding a symbol "~" immediately above a symbol "A" is denoted as "A~".

Embodiment 1

In the present embodiment, an example in which the disclosed technique is applied to calculation of control for resolving overload in a power system will be described.

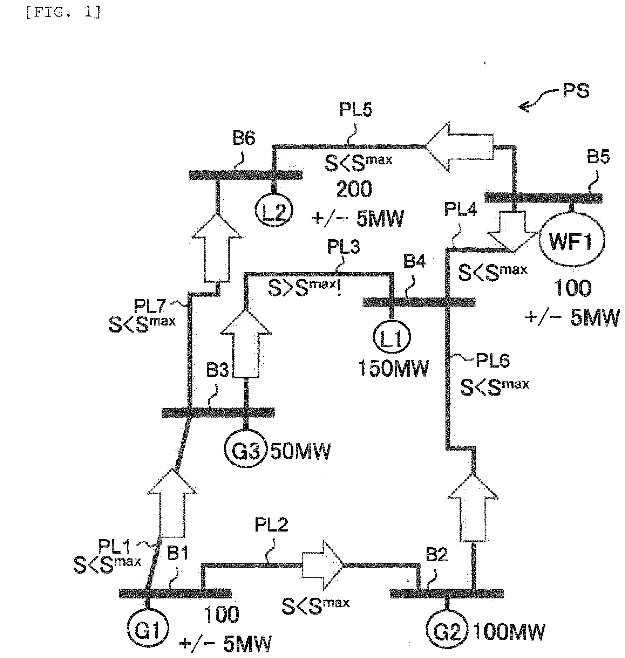

First, the power system will be described with reference to FIG. 1. FIG. 1 is a diagram illustrating a configuration example of a power system PS.

The power system PS is a network mainly configured by power generation equipment, power transmission equipment, and demand, and main purpose of the power system PS is to deliver electrical power to the demand via the power transmission equipment. In order to operate the power system PS with high reliability, it is necessary for a line power flow S to strictly adhere to an upper limit $S^{max}$ of the line power flow. In FIG. 1, the power generation equipment includes power generators G1 to G3 and a wind power generator WF1. The power transmission equipment includes power transmission lines PL1 to PL7. The demand includes loads L1 to L3. As illustrated in FIG. 1, the power generators G1 to G3 and the loads L1 to L3 are connected to bus lines B1 to B6, and the bus lines B1 to B6 are connected via the power transmission lines PL1 to PL7, thereby forming the power system PS.

In this case, the upper limit $S^{max}$ of the line power flow is determined by the voltage stability, the frequency stability, and the transient stability of the power system and the thermal capacity of the power transmission equipment. A violation state (overload) in which the line power flow S exceeds the upper limit $S^{max}$ of the line power flow affects the reliability of power transportation which is the main purpose of the power system, and thus needs to be resolved.

Resolution of the overload is achieved by combining means such as switching of the power generation output of the power system, a change in the state of the power transmission equipment, and a change of the demand. However, except for the power transmission equipment, there is a concern that the state of the power system may change before the control of resolving the overload is reflected. The change in the state of the power system is denoted by "+/-" in FIG. 1, and, for example, refers to the change in generated power or consumed power in a bus line to which a renewable energy power source or a load is connected. An object of the system according to the present embodiment is to calculate control that can resolve overload with high reliability even in a power system in which the change in the state as described above is expected. Note that FIG. 1 illustrates an example in which the power transmission amount of the power transmission line PL3 shows an overload state (S > $S^{max}$!), and thus the power system is operated so as to resolve the overload without unnecessarily affecting other power transmission lines.

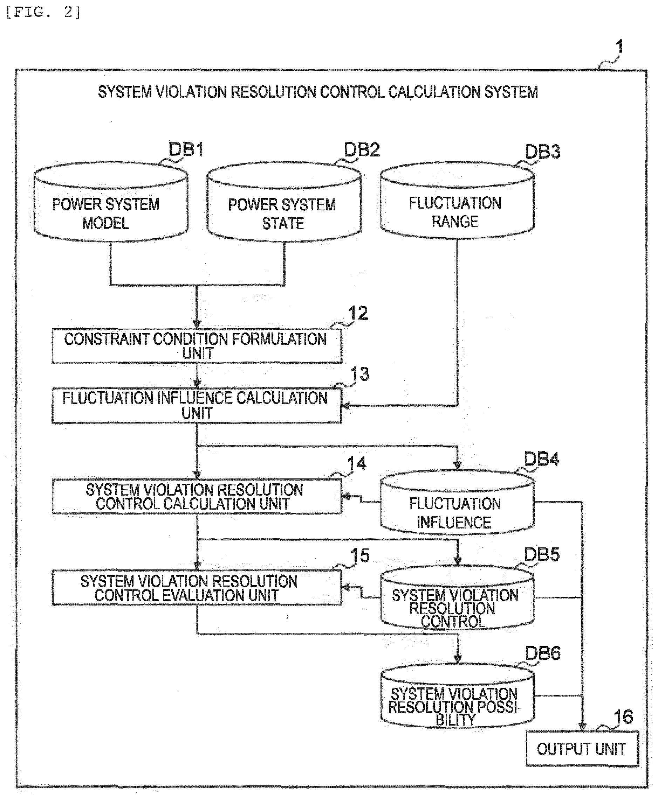

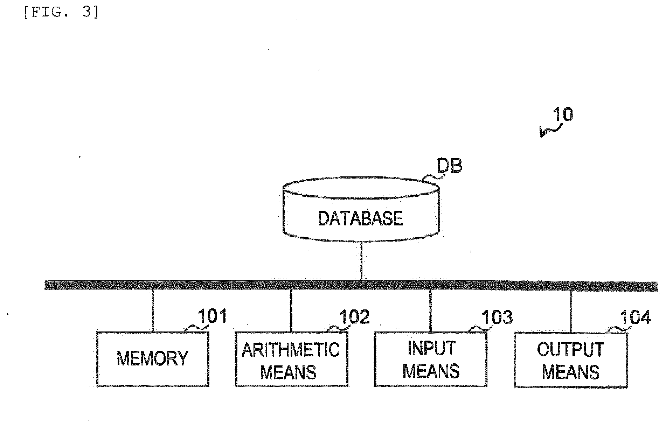

Here, the configuration of a system violation resolution control calculation system 1 according to the present embodiment will be described with reference to FIG. 2. FIG. 2 is a diagram illustrating a configuration example of the system violation resolution control calculation system 1 according to Embodiment 1. FIG. 3 is a diagram illustrating a hardware configuration example of the system violation resolution control calculation system 1 according to Embodiment 1.

The system violation resolution control calculation system 1 is a system configured by a computer 10 (FIG. 3). The functional configuration of the system violation resolution control calculation system 1 illustrated in FIG. 2 is implemented using each hardware element of the computer 10 illustrated in FIG. 3. The computer 10 includes a memory 101 which is a main storage device, an arithmetic means 102 which is a processor such as a CPU and a GPU, and an input means 103 such as a keyboard, a mouse, and a touch panel. In addition, the computer 10 includes an output means 104 including a GPU, a monitor, and a communication interface and a database DB which is an external storage device. In FIG. 2, data in the memory 101 and the database DB, each processing function unit implemented by execution of a program by the arithmetic means 102, and the output means 104 that displays a result via the GPU and the monitor are represented by respective databases and respective processing blocks.

The description returns to FIG. 2. The system violation resolution control calculation system 1 includes a power system model DB1 that stores a power system model, a power system state DB2 that stores a power system state, and a fluctuation range DB3 that stores a fluctuation range. The system violation resolution control calculation system 1 further includes a fluctuation influence DB4 that stores a fluctuation influence, a system violation resolution control DB5 that stores system violation resolution control, and a system violation resolution possibility DB6 that stores a system violation resolution possibility. At least any one of the power system model DB1, the power system state DB2, the fluctuation range DB3, the fluctuation influence DB4, the system violation resolution control DB5, and the system violation resolution possibility DB6 may be an external device connected to the system violation resolution control calculation system 1.

The system violation resolution control calculation system 1 further includes, as processing functions, a constraint condition formulation unit 12, a fluctuation influence calculation unit 13, a system violation resolution control calculation unit 14, and a system violation resolution control evaluation unit 15. The system violation resolution control calculation system 1 further includes an output unit 16 such as a display and a speaker. The output unit 16 may be an external device connected to the system violation resolution control calculation system 1.

The constraint condition formulation unit 12 formulates and outputs a power system constraint using the power system model DB1 and the power system state DB2 as inputs. The fluctuation influence calculation unit 13 calculates and outputs a fluctuation influence using the power system constraint output by the constraint condition formulation unit 12 and the fluctuation range DB3 as inputs. The calculated fluctuation influence is stored in the fluctuation influence DB4.

The system violation resolution control calculation unit 14 calculates and outputs system violation resolution control using the power system constraint output by the constraint condition formulation unit 12 and the fluctuation influence DB4 as inputs. The calculated system violation resolution control is stored in the system violation resolution control DB5. The system violation resolution control evaluation unit 15 calculates and outputs the system violation resolution possibility DB6 using the power system model DB1, the power system state DB2, and the system violation resolution control DB5 as inputs. The output unit 16 displays these inputs and outputs. The detailed flow of each function will be described below.

Here, various input data will be described. The power system model DB1 is data that stores impedance of the power system PS, a connection configuration, upper and lower limits of output of a power generator, load characteristics, a power generator model, and the like. The power system model DB1 contains one or more of data used for power flow calculation assuming that the frequency of the power system is constant, and data used for dynamic calculation assuming that the frequency of the power system can fluctuate.

The power system state DB2 is data that represents the state of the power system, and contains information such as the voltage magnitude and the phase of each bus line calculated by state estimation of the power system, and the power flow of each power transmission line calculated by the power flow calculation.

The fluctuation range DB3 is a range of bus line power of the power system that can uncertainly fluctuate, and can be expressed by expression (1), for example.

[Math. 1]

$$\tilde{P} = [\tilde{P}_1, .., \tilde{P}_i] | i \in N$$
$$\tilde{P}_i{}^{min} \leq \tilde{P}_i \leq \tilde{P}_i{}^{max} | i \in N$$
$$\cdots (1)$$

Where N is the number of bus lines, P~ is a vector representing power fluctuations of all bus lines, $P_i$~ is a power fluctuation of a bus line i, and $P_i$~$^{min}$ and $P_i$~$^{max}$ are lower and upper limits of the power fluctuation $P_i$~ of the bus line i. $P_i$~$^{min}$ and $P_i$~$^{max}$ are stored in the fluctuation range DB3.

In the power system PS in FIG. 1, portions denoted by "+/-" correspond to the fluctuation range DB3. For example, since a power fluctuation is large in a bus line to which a renewable energy power source is connected, it is likely that the fluctuation range is set to be large. The setting of a fluctuation range will be described below.

Next, various output data will be described. The fluctuation influence DB4 represents the influence of a fluctuation range on a target power system. One example is the influence of a fluctuation range on each power transmission line. Mathematically, the influence can be expressed by expression (2), for example.

[Math. 2]

$$\widetilde{S_l}^{min} \leq \tilde{S}_l \leq \tilde{S}_l^{max} \quad \cdots (2)$$

Where $S_l\sim$ is an influence of a power flow fluctuation on a power transmission line 1 due to the fluctuation range DB3, and $S_l\sim^{min}$ and $S_l\sim^{max}$ are upper and lower limits of the influence of the power flow fluctuation on the power transmission line 1 due to the fluctuation range DB3.

The system violation resolution control DB5 indicates, for example, a switching amount of the power generation equipment or a load of the power system, or a change in system configuration for resolving a system violation. The switching amount of the power generation equipment or a load of the power system can be expressed by expression (3), for example.

[Math. 3]

$$\Delta P = [\Delta P_1, \ldots, \Delta P_i] | i \in N \quad \cdots (3)$$

Where $\Delta P_i$ is an amount of change in effective power to the bus line i. In addition to the amount of change in effective power, it is also possible to resolve a violation by changing the system configuration.

The system violation resolution possibility DB6 is a result of determining whether it is possible to resolve a system violation by system violation resolution control. When it is not possible to resolve the system violation, a margin of a system violation amount to violation resolution may be indicated.

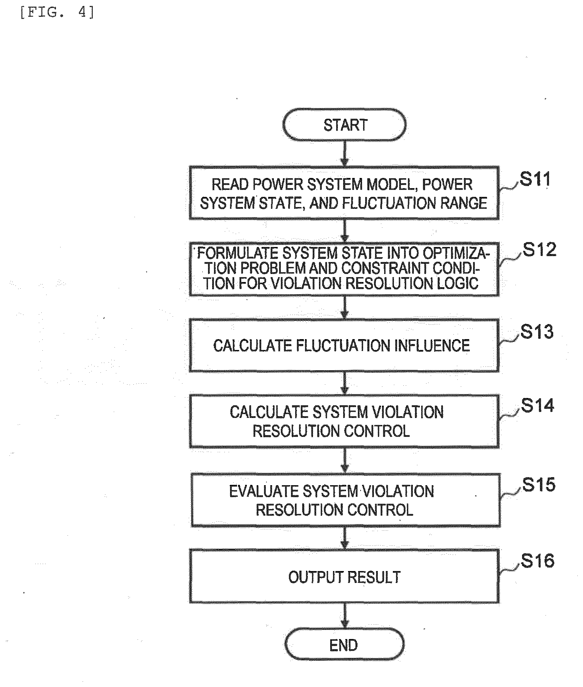

Next, the overall processing flow of the present embodiment will be described with reference to FIG. 4. FIG. 4 is a flowchart showing an example of the overall processing of the system violation resolution control calculation system 1 according to Embodiment 1.

In step S11, the system violation resolution control calculation system 1 reads the power system model DB1, the power system state DB2, and the fluctuation range DB3. In step S12, the constraint condition formulation unit 12 formulates the power system model DB1 and the power system state DB2 as a constraint condition for a violation resolution logic.

In step S13, the fluctuation influence calculation unit 13 calculates the fluctuation influence DB4 of a power fluctuation of each bus line on the power system based on the constraint condition (power system constraint) calculated in step S12 and the fluctuation range DB3. In step S14, the system violation resolution control calculation unit 14 calculates the system violation resolution control DB5 based on the power system constraint and the fluctuation influence DB4. In step S15, the system violation resolution control evaluation unit 15 evaluates the system violation resolution control DB5. In step S16, the evaluation result of step S15 is output to the output unit 16.

By using the above-described series of controls, a user can obtain a fluctuation influence, system violation resolution control, and a system violation resolution possibility with respect to an input power system model, an input power system state, and an input fluctuation range.

Next, the details of respective steps S11 to S16 in FIG. 4 will be described using the power system PS illustrated in FIG. 1 as a specific example.

The power system model DB1 of the present embodiment is, for example, a model of the power system PS illustrated in FIG. 1. The power system state DB2 is, for example, a state of the power system PS illustrated in FIG. 1. With respect to this state, the present embodiment assumes a state change of the fluctuation range DB3 of ±5 MW in the bus lines B1, B5, and B6. In step S11, these input data are acquired from a user or another system.

In step S12, the power system state DB2 is formulated as a constraint condition for the violation resolution logic. At this time, the constraint condition is created such that a constraint on the power system is observed by violation resolution control under the influence of the fluctuation range DB3. The constraint condition can be expressed by expression (4), for example.

[Math. 4]

$$S_l^{min} \leq S_l^{init} + A\,\Delta P + A\tilde{P} \leq S_l^{max} \quad \cdots (4)$$

**EP 4 492 604 A1**

Where Slinit is an apparent power of the power transmission line identified by an index 1 in the power system state DB2. A is a sensitivity matrix representing the amount of change in each power transmission line due to the change in effective power of each bus line. $S_l^{max}$ and $S_l^{min}$ are upper and lower limits of the line power flow in the power transmission line identified by the index I.

Here, "$\Delta P + AP\sim$" in the middle of expression (4) represents the sum of a control amount $\Delta P$ by violation resolution control and an influence of the change in effective power of a bus line on the line power flow. The sensitivity factor A may be calculated by repeating the power flow calculation for changes in respective elements of the power system model DB1, or a power transfer distribution factor (PTDF) which can be calculated by using the direct current power flow of the power system may be used as the sensitivity factor A. When expression (4) is satisfied, at least in a linearized region, overload of the power system (a type of violation) is resolved even when the effective power of the bus line fluctuates. In addition, by defining the influence of a fluctuation component as a constraint in calculating violation resolution control, application to various violation resolution control calculation logics is possible.

Next, the details of step S13 will be described. First, when no control is executed, it is understood that the constraint expression of expression (4) is determined by a fluctuation range as in expression (5).

[Math. 5]

$$S_l^{min} \leq S_l^{init} + A\tilde{P} \leq S_l^{max} \quad \cdots (5)$$

At this time, since a fluctuation P~ does not necessarily have a cooperative value for optimization unlike a decision variable for an optimization problem, it is difficult to evaluate the influence of the fluctuation range. Therefore, in the present embodiment, by using the linear relationship of expression (5), the influence on the power transmission line 1 by the fluctuation range DB3 due to the change in effective power of the bus line is separated into an upper limit and a lower limit.

[Math. 6]

$$S_l^{min} - A\tilde{P} \leq S_l^{init} \leq S_l^{max} - A\tilde{P} \quad \cdots (6)$$

For example, the lower limit at which the influence by the fluctuation range is severe can be solved through the optimization problem of expression (7).

[Math. 7]

$$\min(-A\tilde{P}_i)$$
$$s.t. \sum_i \tilde{P}_i = 0$$
$$\cdots (7)$$

Here, as shown in expression (7), it is desirable that the sum of the power fluctuation Pi~ of the effective power of the bus line is zero. This is because the above is an important premise in the power flow calculation of the power system, and collapse of this premise directly affects the power flow calculation.

Similarly, the upper limit at which the influence by the fluctuation range is severe can be solved through the optimization problem of expression (7).

[Math. 8]

$$\max A\tilde{P}_i$$
$$s.t. \sum_i \tilde{P}_i = 0$$
$$\cdots (8)$$

By separating the constraint expression of a power system state into an optimization problem in which the power flow fluctuation of each power transmission line due to the influence of an effective power fluctuation in the bus line is set as an objective function, it is possible to calculate the influence of an assumed fluctuation range. The influence of the fluctuation range can be represented by expression (9) when overload is targeted.
[Math. 9]

$$\Delta \tilde{S}_l^{min}, \Delta \tilde{S}_l^{max} \quad \cdots (9)$$

In this way, since the influence of a power fluctuation in the bus line is calculated by solving the optimization problem in which the power flow fluctuation separated from the constraint condition is set as the objective function, a versatile influence which does not depend on individual optimization problems is calculated. That is, a fluctuation influence is calculated by solving a set of individual optimization calculations for calculating the influence of a fluctuation. Therefore, the influence calculated in this way can be applied to various algorithms for calculating violation resolution control for a power system.

Next, the details of step S14 will be described. In step S14, for example, an optimization problem that minimizes the amount of change in effective power to each bus line is used to resolve a violation of the power system. For example, the solution of the optimization problem in expression (10) is used.
[Math. 10]

$$\min |\Delta P|$$

$$s.t.$$

$$S_l^{min} - \Delta \tilde{S}_l^{min} \le S_l^{init} \le S_l^{max} - \Delta \tilde{S}_l^{max}$$

$$\sum_i \Delta P_i = 0$$

$$\Delta P_i^{min} \le \Delta P_i \le \Delta P_i^{max}$$

$$\cdots (10)$$

Expression (10) is expressed as an absolute value minimization problem, but may be reformulated and solved as linear programming. In any case, the calculated solution is ΔP and is a control amount for resolving a violation of the target power system. When the solution satisfies the constraint of expression (10), a robust control amount for an assumed fluctuation can be calculated.

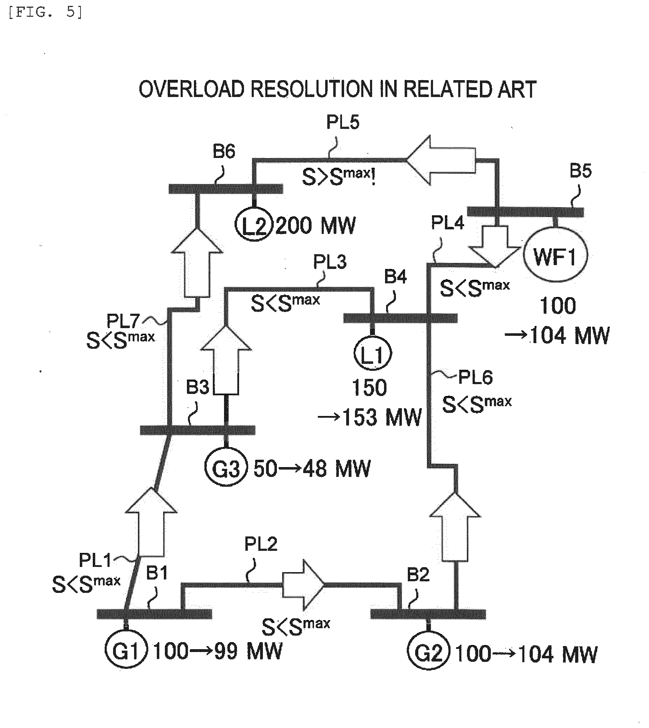

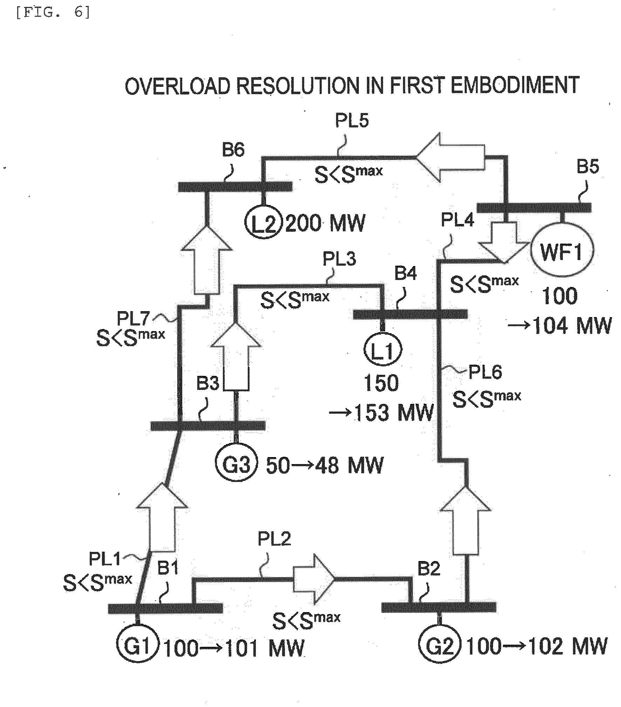

An example of robust control will be described with reference to FIG. 5 and FIG. 6. FIG. 5 is an explanatory diagram of an operation example of a system violation resolution control calculation system in a related art. FIG. 6 is an explanatory diagram of an operation example of the system violation resolution control calculation system according to Embodiment 1.

First, a case of performing control in the related art that does not consider the fluctuation range DB3 is considered. As illustrated in FIG. 5, the output of the wind power generator WF1 is controlled from 100 to 104 MW, the output of the power generator G1 is controlled from 100 to 99 MW, the output of the power generator G2 is controlled from 100 to 104 MW, the output of the power generator G3 is controlled from 50 to 48 MW, and the consumption of the load L1 is controlled from 150 to 153 MW. Since the fluctuation range DB3 is not considered, no problem occurs when the system state does not change. However, when the system state changes, the violation in the power transmission line PL3 (FIG. 1) is resolved, but a violation is provoked in another power transmission line (power transmission line PL5) as illustrated in FIG. 5.

Next, a case of performing control of the present embodiment that considers the fluctuation range DB3 is considered. As illustrated in FIG. 6, this control differs from the related art illustrated in FIG. 5 in that the output of the power generator G1 is controlled from 100 to 101 M and the output of the power generator G2 is controlled from 100 to 102 MW, and violation resolution is possible even when the system state changes because the fluctuation range DB3 is considered.

The description returns to FIG. 4. In step S15, it is confirmed whether a violation of the system state can be resolved by the control amount calculated in step S14. At this time, when the control amount calculated in step S14 is reflected in a power system model and the violation of the system state can be resolved by the control amount calculated in step S14 confirmed by the power flow calculation, for example, "OK (resolvable)" is recorded in the system violation resolution possibility DB6. On the other hand, when the violation of the system state cannot be resolved by the control amount calculated in step S14, for example, "NG (irresolvable)" is recorded in the system violation resolution possibility DB6. When the violation of the system state cannot be resolved by the control amount calculated in step S14, a margin to violation resolution may be recorded.

The system violation resolution control calculation unit 14 may calculate system violation resolution control in which the fluctuation range DB3 is not considered. In that case, the system violation resolution control evaluation unit 15 reflects a control amount calculated without considering the fluctuation range DB3 into the power system model, and then performs confirmation by the power flow calculation. When the violation of the system state can be resolved by the control amount calculated without considering the fluctuation range DB3, for example, "OK (resolvable)" is recorded in the system violation resolution possibility DB6. On the other hand, when the violation of the system state cannot be resolved by the control amount calculated without considering the fluctuation range DB3, for example, "NG (irresolvable)" is recorded in the system violation resolution possibility DB6. When the violation of the system state cannot be resolved by the control amount calculated without considering the fluctuation range DB3, a margin to violation resolution may be recorded.

The system violation resolution control evaluation unit 15 evaluates one or more of a case with robustness (with consideration of the fluctuation range DB3) and a case without robustness (without consideration of the fluctuation range DB3). By using both evaluation with robustness and evaluation without robustness, the necessity for robustness and the effect of control can be evaluated.

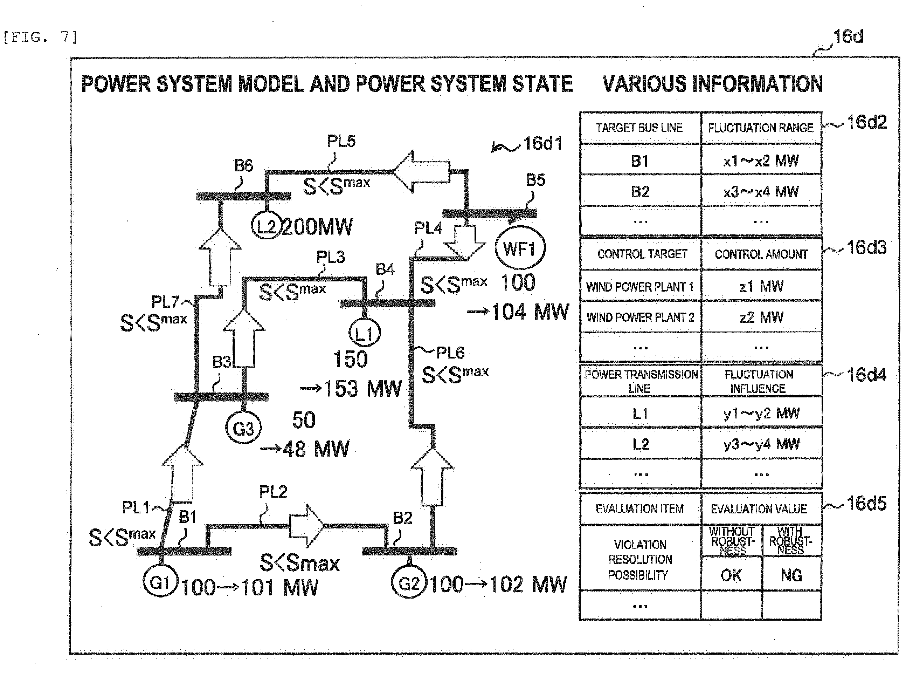

In step S16, the calculation result of step S15 is displayed. A display example will be described with reference to FIG. 7. FIG. 7 is a diagram illustrating an example of a screen display 16d displayed at the output unit 16 of the system violation resolution control calculation system 1 according to Embodiment 1.

At the output unit 16, the power system model and the power system state are displayed in a display 16d1, whereby the state of the power system to be analyzed can be confirmed. In addition, the fluctuation range DB3 used for analysis is displayed in a display 16d2, the system violation control for this fluctuation range DB3 is displayed in a display 16d3, the fluctuation influence is displayed in a display 16d4, and the system violation resolution possibility is displayed in a display 16d5. With the display as above, a user can confirm whether robust violation control for a fluctuation range is possible, and utilize the robust violation control for system control.

By using the system violation resolution control calculation system 1 according to the present embodiment, it is possible to calculate robust control that can resolve a violation in response to an uncertain influence due to a change in the state of a power system.

Embodiment 2

In an embodiment, there may be a case in which it is difficult to calculate system violation resolution control when the fluctuation range DB3 is too wide. In the present embodiment, as an example of avoiding a difficulty in calculating system violation resolution control, a bottleneck power transmission line is identified, and then an objective function for overload violation control is calculated by solving a problem for minimizing a violation degree of the bottleneck power transmission line.

[Math. 11]

$$\min(S_l^{max} - \Delta \tilde{S}_l^{max} + A \Delta P)$$

$$s.t.$$

$$S_l^{min} - \Delta \tilde{S}_l^{min} \le S_l^{init} + A \Delta P \le S_l^{max} - \Delta \tilde{S}_l^{max}$$

$$\sum_i \Delta P_i = 0$$

$$\cdots (11)$$

In expression (11), "l" is the index of the power transmission line identified as the bottleneck, and $S_l^{max}$ and $S_l^{min}$ are upper and lower limits of the line power flow of the power transmission line, and $\Delta S_l\tilde{}^{max}$ and $\Delta S_l\tilde{}^{min}$ are upper and lower limits of the influence of the fluctuation range DB3 on the line power flow of the power transmission line.

As a modification example, system violation control may be calculated after narrowing a fluctuation range based on predetermined control. As another modification example, a constraint on a fluctuation range can be partially relaxed by assigning priorities to power transmission lines.

That is, when system violation resolution control cannot be calculated within a predetermined time or a predetermined number of trials, the system violation resolution control calculation unit 14 (FIG. 2) solves an optimization problem in which an objective function, a constraint condition, and the fluctuation range DB3 which is a cause of an influence are relaxed.

As a result, the system violation resolution control calculation unit 14 may be able to calculate control for reducing or minimizing a system violation.

Embodiment 3

In the present embodiment, an example of a fluctuation range calculation unit 2 that calculates the fluctuation range DB3 will be described.

The system violation resolution control calculation system 1 of Embodiment 1 is implemented by setting a fixed margin to a constraint expression for a power system so as to calculate system violation resolution control that can respond to the fluctuation range DB3. However, setting an unnecessarily large margin to the fluctuation range DB3 may result in excessive control. Therefore, in the present embodiment, the fluctuation range calculation unit 2 that calculates the proper fluctuation range DB3 so as not to result in excessive control will be described.

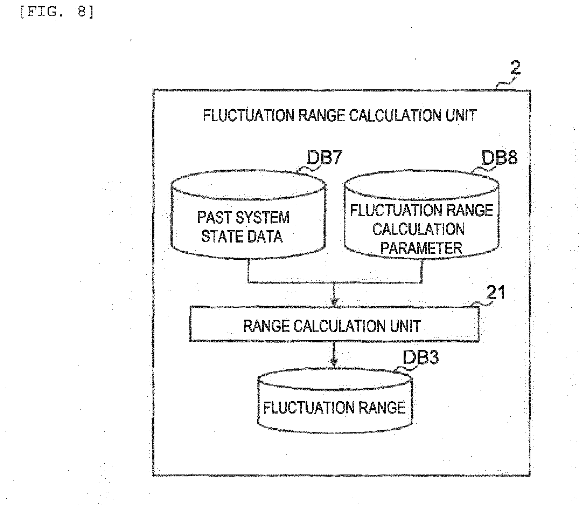

The fluctuation range calculation unit 2 will be described with reference to FIG. 8. FIG. 8 is a diagram illustrating a configuration example of the fluctuation range calculation unit 2 according to Embodiment 3.

The fluctuation range calculation unit 2 includes past system state data DB7 that stores a past system, a fluctuation range calculation parameter DB8, a range calculation unit 21, and the fluctuation range DB3. The past system state data DB7 stores data such as past power generation results, past configuration results, and past load results. The fluctuation range calculation parameter DB8 stores, for example, a designated range for calculating a paste system state result, a calculation interval for a fluctuation range, and a severity of the fluctuation range. Here, the calculation interval for a fluctuation range is an interval for calculating individual distributions. For example, in the case of a time series range of 10 seconds, the amount of a power fluctuation is calculated with reference to the beginning of the 10 seconds.

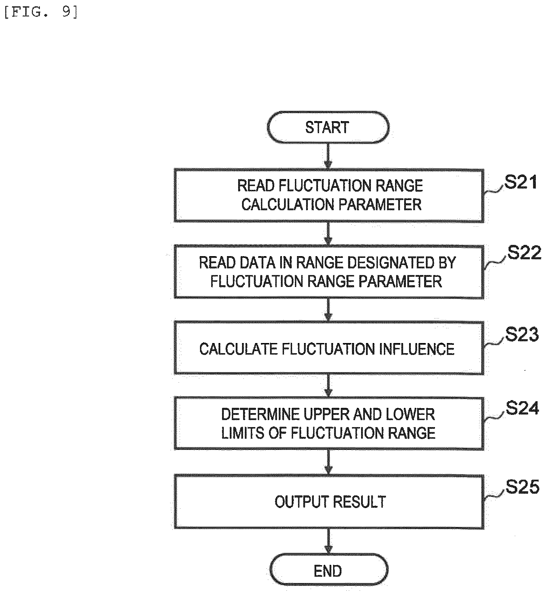

The detailed flow of the fluctuation range calculation unit 2 will be described with reference to FIG. 9. FIG. 9 is a flowchart showing an example of fluctuation range calculation processing of the fluctuation range calculation unit 2 according to Embodiment 3.

First, in step S21, the range calculation unit 21 of the fluctuation range calculation unit 2 reads the fluctuation range calculation parameter DB8. Next, in step S22, the range calculation unit 21 reads data in the range specified by the fluctuation range parameter read in step S21 from the past system state data DB7. Next, in step S23, the range calculation unit 21 calculates a range of the fluctuation influence of each bus line at a fluctuation interval. Next, in step S24, the range calculation unit 21 regards the range of the fluctuation influence calculated in step S23 as a distribution, and determines, based on the severity of this fluctuation range, the upper and lower limits of the fluctuation range. Next, in step S25, the range calculation unit 21 outputs the fluctuation range DB3.

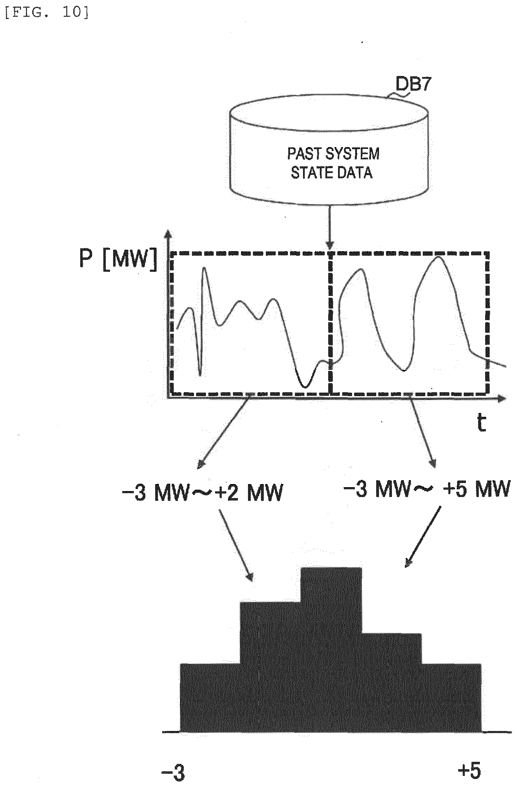

Step S23 and step S24 will be described with reference to FIG. 10. FIG. 10 is an explanatory diagram of range calculation in the fluctuation range calculation unit 2 according to Embodiment 3.

A range of a power fluctuation in each bus line calculated based on a fluctuation range can be expressed by a certain distribution (e.g., a normal distribution). At this time, in the distribution within a calculation range, $1\sigma$, $2\sigma$, $3\sigma$, or the like based on a standard deviation $\sigma$ is obtained as a severity. Here, the upper and lower limits corresponding to the severity are defined as a fluctuation range. It should be noted that, for a bus line whose output upper limit and output lower limit are clear such as renewable energy, a fluctuation range may be calculated for each output of renewable energy.

When the range of a power fluctuation of each bus line cannot be expressed by a normal distribution, a parameter equivalent to the severity may be used as a substitute. For example, in a distribution, an upper limit and a lower limit including data of 68.27 W above and below the median corresponding to $1\sigma$ may be used as substitutes.

Embodiment 4

In the present embodiment, an example in which the system violation resolution control calculation system 1 of Embodiment 1 is coordinated with various systems of a power system will be described.

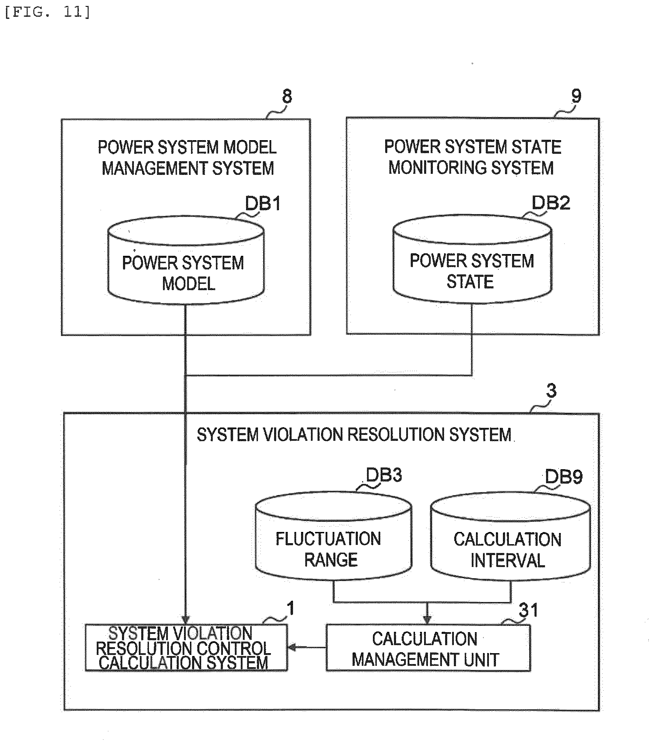

Here, the overall configuration of a system violation resolution system 3 will be described with reference to FIG. 11. FIG. 11 is a diagram illustrating a configuration example of the system violation resolution system 3 according to Embodiment 4. The system violation resolution system 3 includes the system violation resolution control calculation system 1 of Embodiment 1 or Embodiment 2, the fluctuation range DB3, a calculation interval DB9, and a calculation management unit 31. The fluctuation range DB3 and the calculation interval DB9 may be external devices connected to the system violation resolution system 3.

The calculation management unit 31 manages calculation using a calculation interval and a fluctuation range as inputs. The system violation resolution control calculation system 1 causes the system violation resolution control calculation system 1 to execute calculation of system violation resolution control using a calculation result of the calculation management unit 31, the power system model DB1 of a power system model management system 8, and the power system state DB2 of a power system state monitoring system 9 as inputs.

Here, the calculation management unit 31 can execute the system violation resolution control calculation system 1 at a predetermined cycle by setting the calculation interval and the fluctuation range DB3. This is particularly important for an on-line calculation system, and when the fluctuation range calculation unit 2 of Embodiment 3 is used, it is possible to always respond to the latest fluctuation range DB3. With this system violation resolution system 3, the screen display 16d of the output unit 16 in FIG. 7 can be continuously updated at a constant cycle.

In addition, when the fluctuation range DB3 is changed, the calculation is executed with the changed fluctuation range DB3, whereby an action such as changing the fluctuation range DB3 in accordance with the time of day can be taken.

By using the system violation resolution system 3 of the present embodiment, a user can perform repetitive calculation using the system violation resolution control calculation system 1 of Embodiment 1 or Embodiment 2 as a part of an on-line system so that a robust control command can always be calculated even under uncertainty assumed within the range of the fluctuation range DB3. Further, with a configuration in which the fluctuation range DB3 is input to the system violation resolution control calculation system 1 via the calculation management unit 31 at a predetermined cycle so as to obtain a calculation result, it is possible to reflect the latest fluctuation factor based on the latest data.

Embodiment 5

In the present embodiment, an example in which the system violation resolution control calculation system 1 of Embodiment 1 or Embodiment 2 is applied to a system stabilization system (protection system) will be described.

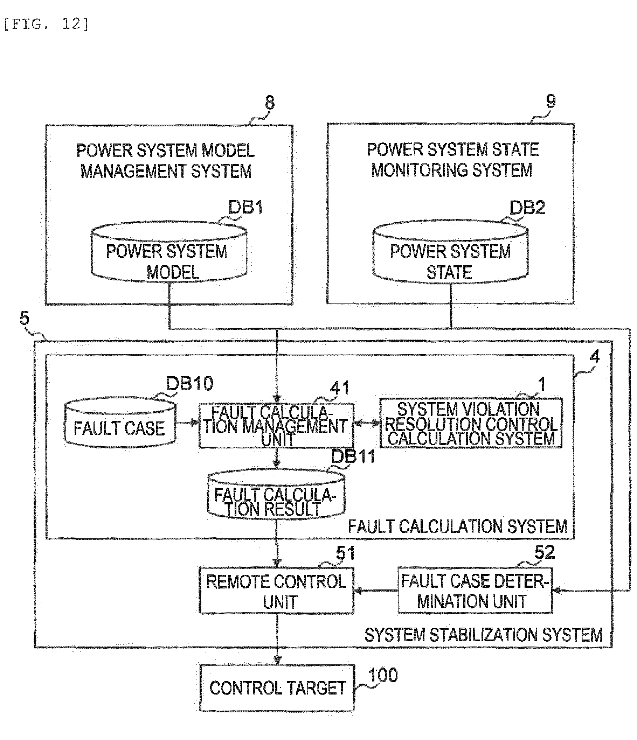

Here, the overall configuration of the present embodiment will be described with reference to FIG. 12. FIG. 12 is a diagram illustrating configuration examples of a fault calculation system and a system stabilization system (protection system) 5 according to Embodiment 6.

The system stabilization system 5 includes a fault calculation system 4, a remote control unit 51, and a fault case determination unit 52. The fault calculation system 4 includes the system violation resolution control calculation system 1 described in Embodiment 1 or Embodiment 2, a fault calculation management unit 41, a fault case DB10, and a fault calculation result DB11. The system stabilization system 5 is connected to the power system model management system 8, the power system state monitoring system 9, and a control target 100 such as power generation equipment, power transmission equipment, or a load.

The system stabilization system 5 is a system that uses the system violation resolution control calculation system 1 of Embodiment 1 or Embodiment 2 as an engine for fault calculation and stabilizes a power system with the fault calculation management unit 41 and the remote control unit 51.

The fault calculation management unit 41 simulates and calculates a power system state corresponding to a fault case of the power system using the power system model DB1 of the power system model management system 8, the power system state DB2 of the power system state monitoring system 9, and the fault case DB10 as inputs. The fault case DB10 is list information in which simulated fault cases simulating possible faults are listed.

The fault calculation management unit 41 can calculate system violation resolution control for each fault case by inputting each power system state simulated and calculated for each fault case into the system violation resolution control calculation system 1. At this time, the above-described fluctuation range may be changed for each fault case.

After the system violation resolution control for each fault case is calculated, the fault calculation management unit 41 stores the state of the fault case and the system violation resolution control for each fault case in association with each other as the fault calculation result DB11. When the power system state DB2 corresponds to a fault, the fault case determination unit 52 causes the remote control unit 51 to refer to the fault calculation result DB11 so as to acquire a control command corresponding to an applicable fault item and output the control command to the control target 100. By using such a configuration, the system stabilization system 5 can stabilize the power system with robust violation resolution control.

Embodiment 6

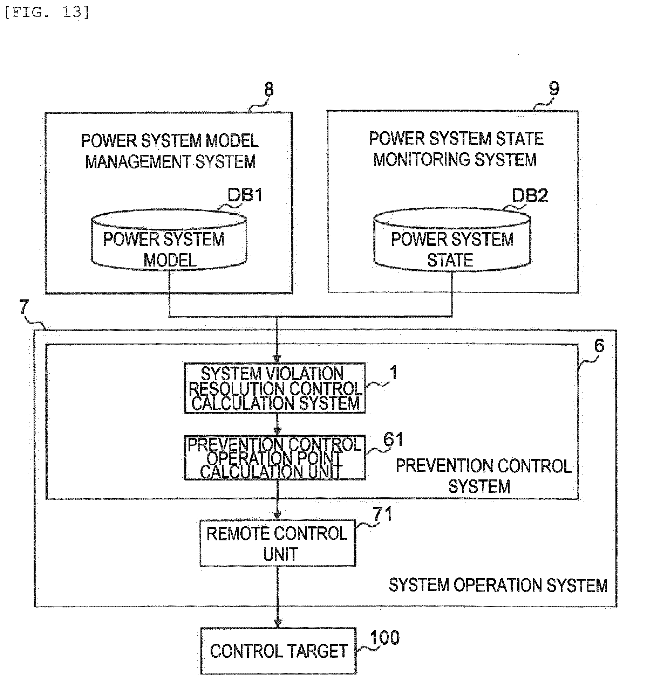

In the present embodiment, an example, in which the system violation resolution control calculation system 1 of Embodiment 1 or Embodiment 2 is applied to a prevention control system that calculates an operation point at which a violation at the time of a fault can be resolved will be described. FIG. 13 is a diagram illustrating a configuration example of a prevention control system 6 and a system operation system 7 according to Embodiment 6. The system operation system 7 includes the prevention control system 6 and a remote operation control unit 71. The prevention control system 6 includes the system violation resolution control calculation system 1 of Embodiment 1 or Embodiment 2 and a prevention control operation point calculation unit 61.

It is known that when a power transmission line K is opened, the amount of change in the power flow of a power transmission line L can be generally calculated by a line outage distribution factor (LODF). The LODF can be calculated from the sensitivity factor A described above. It is known that the power flow $P_l$ of the power transmission line 1 after the power transmission line k is opened can be expressed by expression (12).

[Math. 12]

$$P_l = LODF_{l,k} P_k^0 + P_l^0 \quad \cdots (12)$$

Where $P_k{}^0$ is a preliminary power flow of the power transmission line k, $P_l{}^0$ is a preliminary power flow of the power transmission line 1, and $LODF_{l,\,k}$ is the LODF of the power transmission line 1 when the power transmission line k is opened. Here, assuming that when one or more power transmission lines k are opened, the $LODF_k$ is LODF for all the power transmission lines that are not opened, a constraint expression of transmission power flow in a fault case of a target power transmission line can be expressed as in expression (13). The prevention control operation point calculation unit 61 acquires expression (10) from the system violation resolution control calculation system 1 so as to generate expression (13).

[Math. 13]

$$s.t.$$
$$S_l^{min} - \Delta \tilde{S}_l^{min} \leq S_l^{init} + A^k(\Delta P + \tilde{P}) + LODF_k P$$
$$\leq S_l^{max} - \Delta \tilde{S}_l^{max} \mid k \in K \cdots (13)$$

Here, the opening of the power transmission line k is regarded as a fault of the power transmission line k and is referred to as a fault case k. The fault case k is a subset of all fault cases K. When a solution k that satisfies the constraint of expression (13) can be calculated, the prevention control operation point calculation unit 61 determines that the violation state of the fault case k is likely to be resolved. In addition, even when a fault occurs in a certain power transmission line k, the prevention control operation point calculation unit 61 calculates, from a complementary set of a set of solutions k satisfying the constraint of expression (13), an operation point (power transmission line) in a state where a system violation is resolved.

Expression (13) is obtained by replacing the first constraint condition of the transmission power flow in expression (10) with an expression using LODF. By using expression (13), before an optimization problem is solved, a possibility of resolving a constraint violation state and an operation point in a state where the violation is resolved can be approximately determined from the constraint condition of the transmission power flow in some cases.

The invention is not limited to the above-described embodiments, but includes various modification examples. For example, the above-described embodiments are described in detail so as to explain the invention in an easy-to-understand manner, and the invention is not necessarily limited to a configuration including all components described. In addition, as long as there is no contradiction, a part of the configuration of a certain embodiment can be replaced with the configuration of another embodiment, and the configuration of a certain embodiment can be added to the configuration of another embodiment. Further, for a part of the configuration of each embodiment, a configuration can be added, deleted, replaced, integrated, or distributed. Furthermore, the configurations and processes described in the embodiments can be appropriately distributed, integrated, or replaced in accordance with a processing efficiency or an implementation efficiency.

Reference Signs List

    1: System violation resolution control calculation system
    3: System violation resolution system
    4: Fault calculation system
    5: System stabilization system
    10: Computer

**Claims**

1. A system violation resolution control calculation system calculating system violation resolution control for resolving a system violation in a power system, the system violation resolution control calculation system comprising:

    a constraint condition formulation unit configured to formulate a constraint condition of an optimization problem for calculating the system violation resolution control based on a model of the power system and a state of the power system; and
    a fluctuation influence calculation unit configured to calculate a degree of influence of a power fluctuation in each bus line on a line power flow of each power transmission line of the power system based on the constraint condition and a fluctuation range indicating a range of a power fluctuation in each bus line of the power system.

2. The system violation resolution control calculation system according to claim 1, wherein the fluctuation influence calculation unit calculates the degree of influence by solving an optimization problem in which a power flow fluctuation applied to a line power flow of each power transmission line of the power system by a power fluctuation of each bus line is set as an objective function.

3. The system violation resolution control calculation system according to claim 1, further comprising a system violation resolution control calculation unit configured to calculate the system violation resolution control by solving the optimization problem based on the degree of influence and the constraint condition.

4. The system violation resolution control calculation system according to claim 3, further comprising a system violation resolution control evaluation unit configured to evaluate a possibility of resolution of the system violation when the degree of influence is considered based on the model of the power system, the state of the power system, and the system violation resolution control calculated by the system violation resolution control calculation unit.

5. The system violation resolution control calculation system according to claim 4, wherein

the system violation resolution control calculation unit calculates a solution of the optimization problem when the degree of influence is not considered, and
the system violation resolution control evaluation unit evaluates a possibility of resolution of the system violation when the degree of influence is not considered based on the model of the power system, the state of the power system, and the solution calculated by the system violation resolution control calculation unit.

6. The system violation resolution control calculation system according to claim 5, wherein at least one of the fluctuation range, the degree of influence, the system violation resolution control, and an evaluation result of the possibility of resolution when the degree of influence is considered, and an evaluation result of the possibility of resolution when the degree of influence is not considered is output from' an output unit.

7. The system violation resolution control calculation system according to claim 1, further comprising a fluctuation range calculation unit configured to calculate the fluctuation range based on past result data of the state of the power system.

8. The system violation resolution control calculation system according to claim 7, wherein the fluctuation range calculation unit reads the past result data of a designated range, calculates a power fluctuation range in each bus line at a predetermined interval, and determines an upper limit and a lower limit of the fluctuation range based on a severity of the power fluctuation range when the power fluctuation range is expressed by a predetermined distribution.

9. The system violation resolution control calculation system according to claim 3, wherein when the system violation resolution control cannot be calculated, the system violation resolution control calculation unit calculates control for reducing or minimizing the system violation by solving another optimization problem obtained by relaxing an objective function of the optimization problem, the constraint condition, or the degree of influence.

10. A system violation resolution system comprising:

the system violation resolution control calculation system according to claim 3; and
a calculation management unit configured to manage execution of calculation of the system violation resolution control by the system violation resolution control calculation system.

11. A fault calculation system comprising:

the system violation resolution control calculation system according to claim 3;
a calculation management unit configured to input a simulated fault case simulating a fault of the power system into the system violation resolution control calculation system and manage execution of calculation of the system violation resolution control that resolves the system violation in the simulated fault case by the system violation resolution control calculation system; and
a storage unit configured to store the system violation resolution control calculated for each simulated fault case and the each simulated fault case in association with each other.

12. A system stabilization system comprising:

the fault calculation system according to claim 11;
a fault case determination unit configured to determine whether the state of the power system corresponds to any fault case; and
a remote control unit configured to refer to the storage unit, acquire the system violation resolution control associated with a simulated fault case corresponding to a fault case determined by the fault case determination unit, and output a control command to a control target based on the system violation resolution control.

13. A prevention control system comprising:

the system violation resolution control calculation system according to claim 1; and
a prevention control operation point calculation unit configured to
replace, in the constraint condition, a constraint condition of a transmission power flow with a constraint condition expressed by using an opening sensitivity when a power transmission line of the power system is opened,
when there is a power transmission line satisfying the replaced constraint condition, determine that the system violation in the power transmission line is likely to be resolved, and
calculate an operation point of the power system in a state where the system violation is resolved.

14. A system violation resolution control calculation method executed by a system violation resolution control calculation system calculating system violation resolution control for resolving a system violation in a power system, the system violation resolution control calculation method comprising:

a constraint condition formulation step of formulating a constraint condition of an optimization problem for calculating the system violation resolution control based on a model of the power system and a state of the power system; and
a fluctuation influence calculation step of calculating a degree of influence of a power fluctuation in each bus line on a line power flow of each power transmission line of the power system based on the constraint condition and a fluctuation range indicating a range of a power fluctuation in each bus line of the power system.

15. The system violation resolution control calculation method according to claim 14, wherein in the fluctuation influence calculation step; the degree of influence is calculated by solving an optimization problem in which a power flow fluctuation applied to a line power flow of each power transmission line of the power system by a power fluctuation in each bus line is set as an objective function.

[FIG. 1]

[FIG. 2]

[FIG. 3]

[FIG. 4]

```
                    ┌─────────────┐
                    │    START    │
                    └──────┬──────┘
                           │
                           ▼
        ┌────────────────────────────────────┐
        │  READ POWER SYSTEM MODEL, POWER     │   S11
        │  SYSTEM STATE, AND FLUCTUATION RANGE │
        └──────────────────┬─────────────────┘
                           │
                           ▼
        ┌────────────────────────────────────┐
        │ FORMULATE SYSTEM STATE INTO OPTIMIZA-│  S12
        │ TION PROBLEM AND CONSTRAINT CONDI-   │
        │ TION FOR VIOLATION RESOLUTION LOGIC  │
        └──────────────────┬─────────────────┘
                           │
                           ▼
        ┌────────────────────────────────────┐
        │   CALCULATE FLUCTUATION INFLUENCE    │  S13
        └──────────────────┬─────────────────┘
                           │
                           ▼
        ┌────────────────────────────────────┐
        │    CALCULATE SYSTEM VIOLATION        │  S14
        │       RESOLUTION CONTROL             │
        └──────────────────┬─────────────────┘
                           │
                           ▼
        ┌────────────────────────────────────┐
        │    EVALUATE SYSTEM VIOLATION         │  S15
        │       RESOLUTION CONTROL             │
        └──────────────────┬─────────────────┘
                           │
                           ▼
        ┌────────────────────────────────────┐
        │          OUTPUT RESULT               │  S16
        └──────────────────┬─────────────────┘
                           │
                           ▼
                    ┌─────────────┐
                    │     END     │
                    └─────────────┘
```

[FIG. 5]

## OVERLOAD RESOLUTION IN RELATED ART

PL5

B6

$S > S^{max}!$

(L2) 200 MW

B5

PL4

WF1

PL3

B4

$S < S^{max}$

$S < S^{max}$

100

→104 MW

PL7

$S < S^{max}$

(L1)

B3

150

PL6

$S < S^{max}$

→153 MW

(G3) 50→48 MW

PL1

$S < S^{max}$

B1

PL2

B2

$S < S^{max}$

(G1) 100→99 MW

(G2) 100→104 MW

[FIG. 6]

## OVERLOAD RESOLUTION IN FIRST EMBODIMENT

PL5

B6

$S < S^{max}$

B5

(L2) 200 MW

PL4

WF1

PL3

B4

$S < S^{max}$

100

→104 MW

PL7

$S < S^{max}$

(L1)

B3

150

PL6

→153 MW

$S < S^{max}$

(G3) 50→48 MW

PL1

$S < S^{max}$

B1

PL2

B2

$S < S^{max}$

(G1) 100→101 MW

(G2) 100→102 MW

[FIG. 7]

~16d

## POWER SYSTEM MODEL AND POWER SYSTEM STATE

~16d1

PL5
B6
$S < S^{max}$
B5
L2 200MW
PL4
WF1
PL3
B4
$S < S^{max}$ 100
PL7~
$S < S^{max}$
→104 MW
$S < S^{max}$
B3
L1
150
~PL6
$S < S^{max}$
G3
50
→153 MW
→48 MW
PL1
B1
PL2
B2
$S < S^{max}$
$S < S^{max}$
$S < Smax$
G1 100→101 MW
G2 100→102 MW

## VARIOUS INFORMATION

| TARGET BUS LINE | FLUCTUATION RANGE | ~16d2 |
|---|---|---|
| B1 | x1~x2 MW | |
| B2 | x3~x4 MW | |
| ... | ... | |

| CONTROL TARGET | CONTROL AMOUNT | ~16d3 |
|---|---|---|
| WIND POWER PLANT 1 | z1 MW | |
| WIND POWER PLANT 2 | z2 MW | |
| ... | ... | |

| POWER TRANSMISSION LINE | FLUCTUATION INFLUENCE | ~16d4 |
|---|---|---|
| L1 | y1~y2 MW | |
| L2 | y3~y4 MW | |
| ... | ... | |

| EVALUATION ITEM | EVALUATION VALUE | | ~16d5 |
|---|---|---|---|
| | WITHOUT ROBUSTNESS | WITH ROBUSTNESS | |
| VIOLATION RESOLUTION POSSIBILITY | OK | NG | |
| ... | | | |

EP 4 492 604 A1

[FIG. 8]

```
                                                                    2
 ┌──────────────────────────────────────────────────────────────┐
 │           FLUCTUATION RANGE CALCULATION UNIT                   │
 │                                                                │
 │         DB7                              DB8                    │
 │    ╔═══════════╗              ╔════════════════════╗           │
 │    ║           ║              ║  FLUCTUATION RANGE ║           │
 │    ║ PAST SYSTEM║              ║    CALCULATION    ║           │
 │    ║ STATE DATA ║              ║     PARAMETER     ║           │
 │    ╚═══════════╝              ╚════════════════════╝           │
 │          │                             │                       │
 │          └──────────────┬──────────────┘                       │
 │                         ▼                          21          │
 │    ┌───────────────────────────────────────────────┐          │
 │    │           RANGE CALCULATION UNIT               │          │
 │    └───────────────────────────────────────────────┘          │
 │                         │                                      │
 │                         ▼          DB3                         │
 │              ╔════════════════════╗                            │
 │              ║  FLUCTUATION RANGE ║                            │
 │              ╚════════════════════╝                            │
 │                                                                │
 └──────────────────────────────────────────────────────────────┘
```

[FIG. 9]

```
          ┌─────────────┐
          │    START    │
          └──────┬──────┘
                 │
    ┌────────────▼────────────┐
    │   READ FLUCTUATION RANGE │ ╮ S21
    │   CALCULATION PARAMETER  │ ╯
    └────────────┬────────────┘
                 │
    ┌────────────▼────────────┐
    │ READ DATA IN RANGE       │ ╮ S22
    │ DESIGNATED BY FLUCTUATION│ ╯
    │ RANGE PARAMETER          │
    └────────────┬────────────┘
                 │
    ┌────────────▼────────────┐
    │ CALCULATE FLUCTUATION    │ ╮ S23
    │ INFLUENCE                │ ╯
    └────────────┬────────────┘
                 │
    ┌────────────▼────────────┐
    │ DETERMINE UPPER AND LOWER│ ╮ S24
    │ LIMITS OF FLUCTUATION    │ ╯
    │ RANGE                    │
    └────────────┬────────────┘
                 │
    ┌────────────▼────────────┐
    │      OUTPUT RESULT       │ ╮ S25
    └────────────┬────────────┘
                 │
          ┌──────▼──────┐
          │     END     │
          └─────────────┘
```

[FIG. 10]

[FIG. 11]

[FIG. 12]

[FIG. 13]

<div align="center">

**INTERNATIONAL SEARCH REPORT**

</div>

| | |
|---|---|
| | International application No. |
| | **PCT/JP2022/043193** |

**A.    CLASSIFICATION OF SUBJECT MATTER**

*H02J 3/00*(2006.01)i; *H02J 13/00*(2006.01)i
FI:   H02J3/00 170; H02J13/00 311R

According to International Patent Classification (IPC) or to both national classification and IPC

**B.    FIELDS SEARCHED**

Minimum documentation searched (classification system followed by classification symbols)

H02J3/00; H02J13/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2021-023023 A (HITACHI, LTD.) 18 February 2021 (2021-02-18)<br>entire text, all drawings | 1-15 |
| P, A | WO 2022/130790 A1 (HITACHI, LTD.) 23 June 2022 (2022-06-23)<br>entire text, all drawings | 1-15 |

☐ Further documents are listed in the continuation of Box C.      ☑ See patent family annex.

| | |
|---|---|
| *    Special categories of cited documents: | "T"   later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"   document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"   document member of the same patent family |

| Date of the actual completion of the international search | Date of mailing of the international search report |
|---|---|
| **18 January 2023** | **31 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/043193**

| Patent document cited in search report | | | Publication date (day/month/year) | Patent family member(s) | | | Publication date (day/month/year) |
|---|---|---|---|---|---|---|---|
| JP | 2021-023023 | A | 18 February 2021 | EP entire text, all drawings | 3771061 | A1 | |
| WO | 2022/130790 | A1 | 23 June 2022 | (Family: none) | | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150242757 B
- US 9507367 B

- WO 2011112365 A

**Non-patent literature cited in the description**

- **L. ROALD ; S. MISRA ; T. KRAUSE ; G. ANDERS-SON**. Corrective Control to Handle Forecast Uncertainty: A ChanceConstrained Optimal Power Flow. *IEEE Transactions on Power Systems*, March 2017, vol. 32 (2), 1626-1637

- **HAOYUAN QU ; L. ROALD ; G. ANDERSSON**. Uncertainty margins for probabilistic AC securityassessment. *2015 IEEE Eindhoven PowerTech*, 2015, 1-6